# EUROPÄISCHE PATENTSCHRIFT

(11) **EP 2 195 584 B1**
(45) Veröffentlichungstag und Bekanntmachung des Hinweises auf die Patenterteilung: **14.12.2016**
(21) Anmeldenummer: 08837515.9
(22) Anmeldetag: 07.10.2008
(51) Int. Cl.: F24J 2/14, F24J 2/46, F24J 2/54

(54) **VORRICHTUNG ZUR VERBINDUNG EINER FESTLEITUNG MIT EINEM ABSORBERROHR EINES SOLARTHERMISCHEN KRAFTWERKS**
DEVICE FOR CONNECTING A FIXED LINE TO AN ABSORBER PIPE OF A SOLAR-THERMAL POWER PLANT
DISPOSITIF PERMETTANT DE RACCORDER UN TUBE FIXE À UN TUBE ABSORBEUR D'UNE CENTRALE HÉLIOTHERMIQUE

(30) Priorität: 08.10.2007 DE 102007048745
(43) Veröffentlichungstag der Anmeldung: 16.06.2010
(73) Patentinhaber: Senior Flexonics GmbH, 34121 Kassel (DE)
(72) Erfinder: BÜRGER, Stefan, 34225 Baunatal (DE); VIVES, Francisco Ortiz, 34246 Vellmar (DE)
(74) Vertreter: Maikowski & Ninnemann Patentanwälte Partnerschaft mbB
(86) Internationale Anmeldenummer: PCT/EP2008/063395
(87) Internationale Veröffentlichungsnummer: WO 2009/047248

(56) Entgegenhaltungen:
- EP-A- 0 377 140
- EP-A- 1 998 120
- WO-A-98/38457
- CH-A5- 637 202
- DE-A1- 3 643 038
- DE-A1- 19 523 506
- US-A- 4 386 600
- US-A- 4 484 568
- US-A- 4 934 324
- US-A- 5 050 913
- JAMES MORENO: 'NREL TES Workshop-Golden-Feb03 1 2002 Evaluation of Interconnections with Molten Salt HTF in a Trough SF', [Online] 21 Februar 2003, XP055109032 Gefunden im Internet: <URL:http://www.nrel.gov/csp/troughnet/pdfs /moreno_sf_interconnections_with_salt_htf.p df> [gefunden am 2014-03-19]

## Beschreibung

V Die Erfindung betrifft eine Vorrichtung zur Verbindung einer Festleitung mit einem Absorberrohr eines solarthermischen Kraftwerks nach dem Oberbegriff des Anspruchs 1.

In zunehmenden Maße werden heute solarthermische Kraftwerke eingesetzt, um auf umweltfreundliche Weise Energie zu erzeugen. Solche Kraftwerke weisen Solarkollektoren auf, wie z.B. Parabolspiegel. Speziell in Parabolrinnen- Kraftwerken weisen Kollektoren Parabolrinnenspiegel und Receiverröhren (auch Absoberrohre genannt) auf. Mit diesen Parabolrinnenspiegeln wird die Sonnenstrahlung eingefangen und über Receiverröhren in ein Arbeitsmedium, z.B. Öl, abgegeben. Dabei können im System Temperaturen von 500 °C oder mehr erreicht werden. Da die Solarkollektoren auf Grund der scheinbaren Bewegung der Sonne beweglich ausgebildet sein müssen, gibt es hohe Anforderungen an die verwendeten Verbindungen zwischen Teilen der Anlage.

Der vorliegenden Erfindung liegt die Aufgabe zugrunde, eine Vorrichtung zu schaffen, die auch bei hohen Temperaturen
und / oder Drücken eine einwandfreie Beweglichkeit der Solarkollektoren gewährleistet.

Diese Aufgabe wird erfindungsgemäß durch eine Vorrichtung mit den Merkmalen des Anspruchs 1 gelöst, nämlich eine Vorrichtung zur Verbindung einer Festleitung mit einem Absorberrohr eines solarthermischen Kraftwerks, wobei um eine Schwenkbewegung mindestens eines Solarkollektors um eine Achse ausführbar ist und ein Absorberrohr bei der Schwenkbewegung mit bewegbar ist. Die erfindungsgemäße Vorrichtung weist eine flexible Rohrverbindung zwischen der Festleitung und dem Absorberrohr, und ein Mittel zur drehmomentfreien und/oder kräftefreien Verbindung der flexiblen Rohrleitung mit dem Absorberrohr auf.

Die flexible Rohrverbindung ist an einem Ende mit einer Drehdurchführung gekoppelt und und mindestens ein Antrieb ist fluchtend zur Drehachse einer Drehdurchführung angeordnet und die flexible Rohrverbindung weist einen Metallschlauch auf, der als mehrlagiger Metall-Wellschlauch ausgebildet ist. Zur Aufnahme von Kräften ist die flexible Rohrverbindung mit einem Kompensatorensystem mit mindestens einem Angularkompensator, mindestens einem Univsersal- und/ oder mindestens einen kardanischen Kompensator, insbesondere drei Angular-Kompensatoren gekoppelt.

Gemäß der Erfindung, weist das Mittel zur drehmomentenfreien Verbindung eine flexible Rohrleitung auf, deren erstes Ende mit dem Absorberrohr verbunden ist und deren zweites Ende drehbar gelagert ist, wobei die Drehachse des zweiten Endes mit der Schwenkachse des mindestens einen Solarkollektors fluchtet. Durch diese geometrische Anordnung wird auf einfache Weise eine drehmomentenfreie Verbindung ermöglicht.

Ferner ist es vorteilhaft, wenn das Mittel zur drehmomentfreien Verbindung ein Mittel zur Synchronisierung der Schwenkbewegung der flexiblen Rohrverbindung mit der Schwenkbewegung des mindestens einen Solarkollektors aufweist.

Für die Herstellung einer Zwangsführung ist es vorteilhaft, wenn die Schwenkbewegung durch ein starres Verbindungselement zwischen einem Schwenkantrieb des mindestens einen Solarkollektors und der flexiblen Rohrverbindung übertragbar ist.

Ferner ist es vorteilhaft, wenn die flexible Rohrverbindung zusätzlich oder alternativ mit mindestens einem Lateral-Kompensator gekoppelt ist.
Auch ist es vorteilhaft, wenn mindestens ein Antrieb fluchtend zur Drehachse einer Drehdurchführung angeordnet ist.

Die Erfindung wird nachfolgend unter Bezugnahme auf die Figuren der Zeichnungen an mehreren Ausführungsbeispielen näher erläutert. Es zeigen:
- Fig. 1: eine perspektivische Ansicht einer ersten Ausführungsform der erfindungsgemäßen Vorrichtung;
- Fig. 2: eine Seitenansicht einer zweiten Ausführungsform der erfindungsgemäßen Vorrichtung;
- Fig. 3: eine perspektivische Ansicht einer dritten Ausführungsform der erfindungsgemäßen Vorrichtung;
- Fig. 4: eine Detailansicht der dritten Ausführungsform;
- Fig. 5: eine Seitenansicht einer vierten Ausführungsform der erfindungsgemäßen Vorrichtung.

Auf Grund der scheinbaren Sonnenbewegung müssen Kollektoren 2 solarthermischer Kraftwerke im Laufe des Tages dem sich ändernden Sonnenstand nachgeführt werden.

Wenn z.B. Parabol-Rinnenspiegel in einem solarthermischen Kraftwerk als Kollektoren 2 verwendet werden, wird die Brennlinie in Nord-Südrichtung aufgestellt und um eine Drehachse A in Ost-Westrichtung, dem Lauf der Sonne folgend, geschwenkt.

Das durch die Sonneneinstrahlung zu erhitzende Medium (z.B. Öl) wird dabei durch Absorberrohre 3 (auch Receiverrohre genannt) geführt, die im Wesentlichen in der Brennlinie der Parabol-Rinnenspiegel liegen.

Unter Berücksichtigung einer Unwetter-Parkstellung (d.h. die Spiegelfläche ist nach unten gerichtet), ergibt sich eine Schwenkbewegung der Kollektoren 2 von ca. 270° um die Achse A.

Solarthermische Kraftwerke, die z.B. nach dem Parabol-Rinnenspiegel-Prinzip arbeiten, benötigen flexible Elemente zwischen einer festen Rohrleitung 4 und der die Schwenkbewegung ausführenden Absorberrohre 3. Die Festleitung 4 ist eine Leitung für das Absorbermedium, die relativ zu den Absorberrohren 3 fest montiert ist.

Auf Grund der hohen thermischen Belastung unterliegen die flexiblen Rohrleitungen 1 und deren Anschlüsse großen mechanischen Belastungen. Als Betriebstemperaturen können 500 °C und Drücke bis 100 bar erreicht werden.

Daher muss damit gerechnet werden, dass auch quer zur Schwenkebene der Solarkollektoren 2 Längsdehnungen der eingesetzten Bauteile (z.B. Absorberrohr 3, Festleitung 4) aufgenommen werden müssen.

Im Folgenden wird anhand verschiedener Ausführungsbeispiele die Verbindung mindestens einer Festleitung mit einem Absorberrohres 3 einer Solaranlage beschrieben.

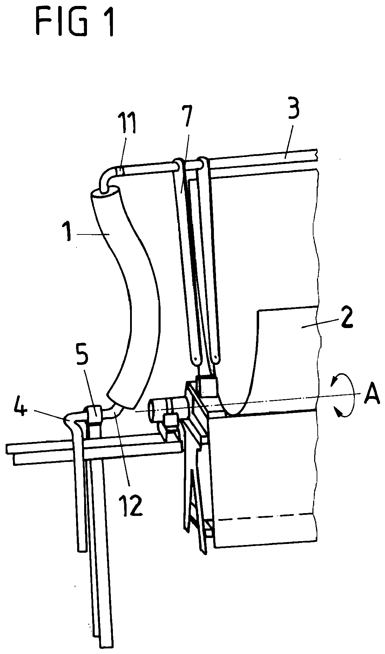

In Fig. 1 ist ein Teil einer solarthermischen Anlage dargestellt, die einen parabolförmigen Solarkollektor 2 aufweist. Wie später noch erläutert wird, weisen solche solarthermischen Anlagen meist eine Vielzahl von Solarkollektoren 2 auf.

In diesem Solarkollektor 2 wird einfallendes Sonnenlicht aufgefangen und in der Brennlinie gebündelt. In der Brennlinie ist ein Absorberrohr 3 angeordnet, dass von einem Absorbermedium, hier Öl, durchströmt ist. Dieses Absorbermedium fließt durch eine flexible Rohrleitung 1, eine Drehdurchführung 5 und eine Festleitung 3, dann in nachgeschalteten Prozessschritten (hier nicht dargestellt) die gespeicherte Wärme abzugeben.

Als Drehdurchführung 5 bezeichnet man insbesondere eine Vorrichtung, die es ermöglicht eine mechanische Drehbewegung durch einen Gegenstand wie z.B. Behälterwand hindurch zu übertragen. Drehdurchführungen können z.B. einachsig flächendichtend oder mehrachsig kugeldichtend ausgebildet sein. Im vorliegenden Ausführungsbeispiel ist die flexible Rohrleitung 1 drehbar in der Drehdurchführung 5 angeordent. Die flexibele Rohrleitung 1 ist hier als mehrlagiger Metall-Wellschlauch (Durchmesser z.B. 50 oder 65 mm) ausgebildet. Um hohen Drücken standzuhalten ist der Metallschlauch mit einer Umflechtung versehen. Zur Verringerung der Wärmeverluste ist die flexible Rohrleitung mit einer flexiblen Dämmschicht umgeben. Als Außentemperatur der flexiblen Rohrleitung können 70 bis 80°C angenommen werden. Die Dämmschicht ist dann noch von einer Dampfsperre und einer mechanischen Schutzschicht aus einem Profilwickelschlauch umgeben.

Der Solarkollektor 2 ist um die Achse A verschwenkbar ausgebildet, wobei sich der Verschwenkwinkel nach dem Sonnenstand richtet. Auch ist eine Not-Aus Stellung, mit einem zum Boden zeigenden Parabolspiegel möglich.

Wenn der Sonnenkollektor 2 verschwenkt wird, bewegt sich das Absorberrohr 3 mit. Ein in Rotationsrichtung befindliches Verbindungselement 7 verbindet die Schwenkachse (A)des Solarkollektors 2 mit dem Absorberrohr 3. Über das Absorberrohr 3 erfolgt die Mitnahme der flexiblen Rohrleitung 1, wobei auf Grund der geometrischen Anordnung ein drehmomentenfreier und / oder kräftefreier Antrieb der flexiblen Rohrleitung 1 nicht gewährleistet ist.

Nicht Drehmomentenfrei und / oder kräftefrei bedeutet in diesem Zusammenhang, dass die an der Verbindung auftretenden Drehmomente und / oder Kräfte mechanisch auf das Absorberrohr 3 wirken und dieses aus dem Fokus drücken.

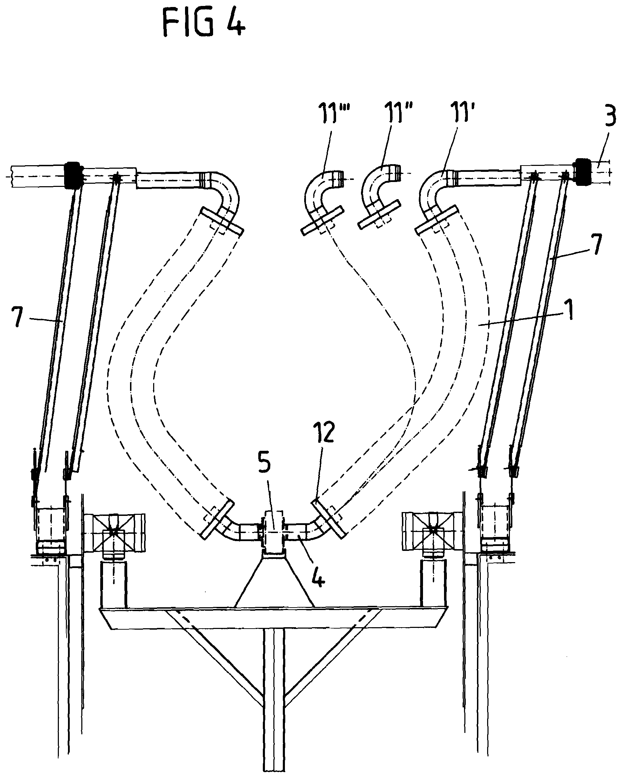

Die geometrische Anordnung weist dabei ein erstes Ende 11 der flexiblen Rohleitung 1 auf, das drehfest mit dem Absorberrohr 3 verbunden ist, so dass dieses erste Ende 11 die Bewegung des Absorberrohres 3 und des Solarkollektors 2 nachvollziehen muss. Hinzu kommen noch Ausgleichsbewegungen, die z.B. auf der Längsausdehnung des Absorberrohres 3 beruhen. Auf Grund der hohen Temperaturunterschiede zwischen dem Umgebungsluftzustand und der Temperaturen der Anlagenteile im Betriebszustand kann es zu einer axialen Längenausdehnung des Absorberrohres 3 kommen. Dabei ist eine Längenausdehnung in der Größenordnung von 50 cm durchaus möglich. Auch diese Längenausdehnung wird von der flexiblen Rohrverbindung 1 aufgefangen (siehe Fig. 4 für verschiedene Stellungung der flexiblen Rohrverbindung 1).

Das zweite Ende 12 der flexiblen Rohrleitung 1 ist mit der Festleitung 4 verbunden. Dabei erfolgt die Verbindung über die Drehdurchführung 5.

Wenn nun das Absorberrohr 3 verschwenkt wird, wird die flexible Rohrleitung 1 auf Grund der Verbindung am ersten Ende 11 mitbewegt, ohne dass am Absorberrohr 3 ein nennenswertes Drehmoment angreift. Dies gilt auch für die Betriebssituationen, in denen das Absorberrohr 3 durch thermische Einflüsse eine Längenausdehnung erfährt.

Hinzu kommt, dass die Druckverluste in der flexiblen Rohrleitung 1 minimiert werden, weil das System sowohl in den flexiblen - als auch den Rotationselementen keine Durchmesserreduzierungen hat. Die Durchmesser der angeschlossenen Rohre werden ohne Einbuße in den Elementen beibehalten.

Die auf die angeschlossenen Rohrleitungen wirkenden Kräfte werden vermieden, weil die der Erfindung zu Grunde liegenden flexiblen Elemente die Kräfte sehr weitgehend selbst kompensieren und nicht auf die angeschlossenen Rohre ausüben. Dies ist insbesondere für die Kräfte wichtig, die auf das Absorberrohr 3 einwirken, weil dieses unbelastet von äußeren Einflüssen, keine Durchbiegung erfährt. Das Absorberrohr 3 bleibt jetzt stets im Brennpunkt des Sonnenkollektors 2 und kann optimal die Energie der hochkonzentrierten Sonnenstrahlen aufnehmen und an das durchströmende Fluid übertragen.

Ziel der Ausführungsform ist es, die Kräfte und Momente, die über das Absorberrohr 3 auf die flexible Verbindungsleitung 1 ausgeübt werden, zu minimieren oder ganz zu vermeiden.

Vorteilhafterweise erfolgt mit der Krafteinleitung für die Rotation des Solarkollektors 2 mit dem Absorberrohr 3, gleichzeitig eine synchrone Drehung der Drehdurchführung 5 und eine gleichzeitige Schwenkbewegung der flexiblen Elemente.

Dabei ist es vorteilhaft, wenn Dreigelenk-Kompensatorensysteme für hohe Druck- und Temperaturbeanspruchung verwendet werden.
Die Funktion des Dreigelenk-Kompensatorsystems ist analog zur Funktion von Schlauchleitungen. Die verschiedenen Bewegungen werden hier auf drei Kompenstoren aufgeteilt, was sonst eine Schlauchleitung in einem kompensiert. Vorteil des Kompensatorensystems ist, ist eine mögliche höhere Druckbelastung.

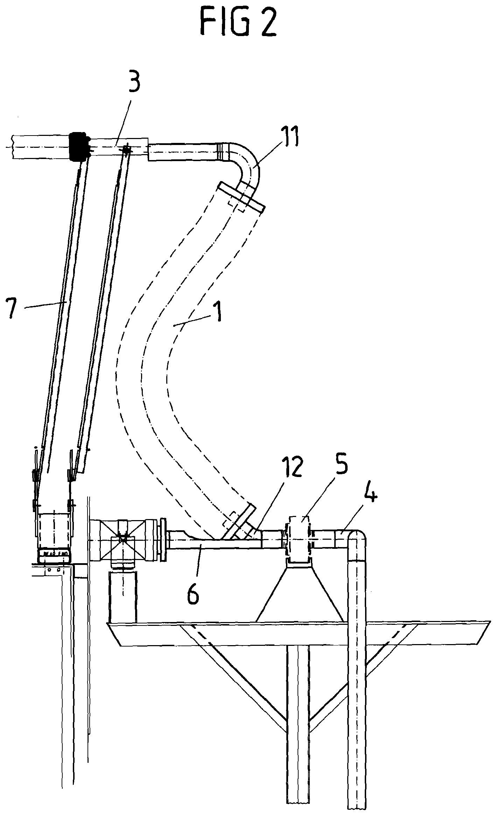

In Fig. 2 ist eine zweite Ausführungsform dargestellt. Hierbei ist ein Antrieb 6 in einer Achse fluchtend mit der Drehdurchführung 5 angeordnet. Die fluchtende Anordnung stellt sicher, dass die mechanischen Belastungen am Anschluss zum Absorberohr 3 so gering wie möglich ist.

Ansonsten ist diese Ausführungsform analog zur ersten Ausführungsform, so dass auf die obige Beschreibung Bezug genommen werden kann.

Durch den synchronen Antrieb der Schwenkbewegung des Solarkollektors 2 und der Drehdurchführung 5 mit angeschlossenen flexiblen Elementen für die Wärmedehnung quer zur Rotationsebene, wird das Absorberrohr 3 vollständig von Biegekräften entlastet. Dadurch ist ein Durchbiegen ausgeschlossen und das Absorberrohr 3 wird stets im Brennpunkt des Solarkollektors 2 (in Fig. 2 nicht dargestellt) verharren. Dadurch wird der Wirkungsgrad und die Energieausbeute der solarthermischen Anlage wesentlich gesteigert.

Die Länge der Solarkollektoren 2 kann vergrößert werden,
so dass günstigere Herstellungs- und Betriebskosten erreicht werden.

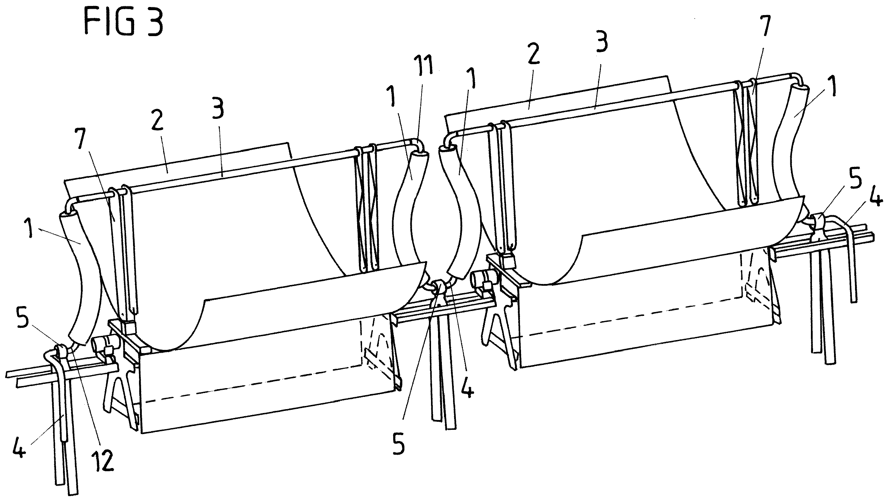

In Fig. 3 ist eine dritte Ausführungsform dargestellt,
die sich an die erste Ausführungsform anlehnt. Hier ist ein größerer Ausschnitt einer solarthermischen Anlage dargestellt, nämlich zwei Solarkollektoren 3. Links und rechts der beiden dargestellten Solarkollektoren 3 können grundsätzlich beliebig viele weitere Solarkollektoren 3 angeordnet sein.

Wie in der ersten Ausführungsform sind die flexiblen Rohrleitungen 1 am ersten Ende 11 mit dem Absorberrohren 3 verbunden. Am zweiten Ende 12 sind sie über Drehdurchführungen 5 mit Festleitungen 4 verbunden.

Fig. 4 zeigt eine Detailansicht der Rohrverbindungen der in Fig. 3 dargestellten Ausführungsform. Dabei ist am ersten Ende 11 der rechts dargestellten flexiblen Rohrleitung 1 dargestellt, wie sich der Anschluss an das Absorberrohr 3 auf Grund thermischer Ausdehnungen verschrieben kann. Im kalten Zustand wird die erste Position , im erwärmten Zustand die zweite Position 11" und im heißen Zustand die dritte Position 11"' eingenommen.

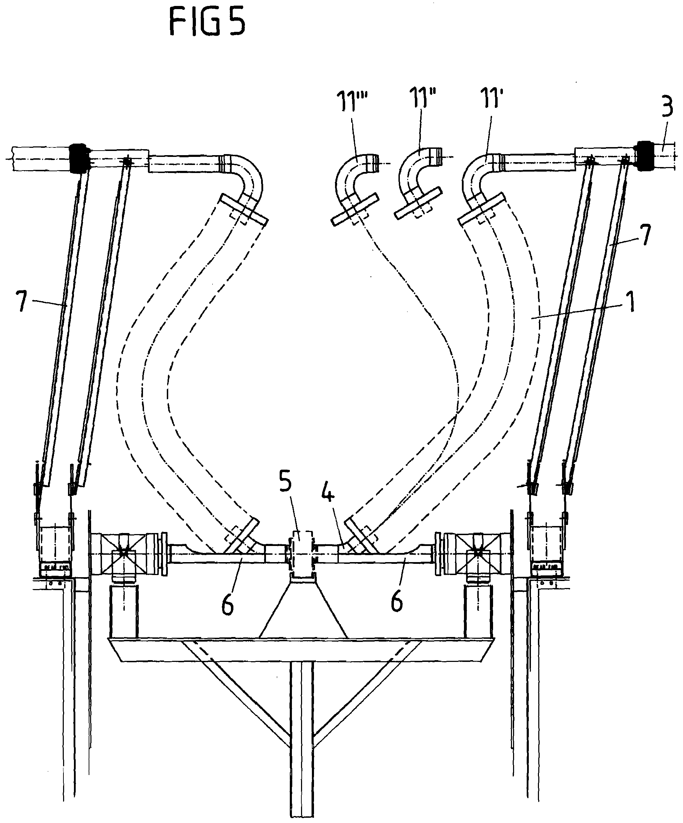

In Fig. 5 wird eine vierte Ausführungsform dargestellt, die sich an die zweite Ausführungsform (Fig. 2) anlehnt. Hier sind zwei Antriebe 6 vorgesehen, die mit der Drehachse der Drehdurchführung 5 fluchten. Wie in Fig. 4 ist auch der Ausgleich der Längsausdehnung des Absorberrohes 3 dargestellt.

Durch diese Ausführung ist es möglich, einzelne Absorberseqmente außer Betrieb zu nehmen. ohne den Betrieb der restlichen Segmente zu beeinflussen. Dies kann in Wartungs oder Reparaturfällen zu Tragen kommen.

Die beschriebenen Ausführungsformen werden im Zusammenhang mit Parabolspiegeln als Solarkollektoren 3 beschrieben. Grundsätzlich sind Ausführungsformen der Erfindung auch bei anderen Typen solarthermischer Kraftwerke einsetzbar, die ein Absorbermedium aufweisen, das von der Sonneneinstrahlung erhitzt wird. Auch sind grundsätzliche andere Anordnungen der Solarkollektoren 3 möglich.

Die Erfindung beschränkt sich in ihrer Ausführung nicht auf die vorstehend angegebenen bevorzugten Ausführungsbeispiele. Vielmehr ist eine Anzahl von Varianten denkbar, die von der erfindungsgemäßen Vorrichtung auch bei grundsätzlich anders gearteten Ausführungen Gebrauch machen.

### Bezugszeichenliste

- 1: flexible Rohrleitung
- 2: Solarkollektor
- 3: Absorberrohr
- 4: Festleitung
- 5: Drehdurchführung
- 6: Antrieb
- 7: starres Verbindungselement

- 11: erstes Ende der flexiblen Rohrleitung
- 12: zweites Ende der flexiblen Rohrleitung

- A: Schwenkachse des Solarkollektors

## Patentansprüche

1. Vorrichtung zur Verbindung einer Festleitung mit einem Absorberrohr eines solarthermischen Kraftwerks, wobei eine Schwenkbewegung mindestens eines Solarkollektors (2) um eine Achse (A) ausführbar ist und ein Absorberrohr (3) bei der Schwenkbewegung mit bewegbar ist, umfassend
a) eine flexible Rohrverbindung (1) zwischen der Festleitung (4) und dem Absorberrohr (3), wobei die flexible Rohrverbindung (1) einen Metallschlauch aufweist, der als mehrlagiger Metall-Wellschlauch ausgebildet ist, und die flexible Rohrverbindung (1) mit einem Kompensatorensystem mit mindestens einem Angularkompensator, mindestens einem Univsersal- und/ oder mindestens einen kardanischen Kompensator, insbesondere drei Angular-Kompensatoren gekoppelt ist, und
b) ein Mittel zur drehmomentfreien und/oder kräftefreien Verbindung der flexiblen Rohrleitung (1) mit dem Absorberrohr (3), wobei
die flexible Rohrverbindung (1) an einem Ende (12) mit einer Drehdurchführung (5) gekoppelt ist,
mindestens ein Antrieb (6) fluchtend zur Drehachse der Drehdurchführung (5) angeordnet ist, und
das Mittel zur drehmomentenfreien und/oder kräftefreien Verbindung die flexible Rohrleitung (1) aufweist, deren erstes Ende (11) mit dem Absorberrohr (3) verbunden ist und deren zweites Ende (12) über die Drehdurchführung (5) mit der Festleitung (4) verbunden und drehbar gelagert ist, wobei die Drehachse des zweiten Endes (12) mit der Schwenkachse (A) des mindestens einen Solarkollektors (3) fluchtet.

2. Vorrichtung nach Anspruch 1, **dadurch gekennzeichnet, dass** das Mittel zur drehmomentfreien Verbindung ein Mittel zur Synchronisierung der Schwenkbewegung der flexiblen Rohrverbindung (1) mit der Schwenkbewegung des mindestens einen Solarkollektors (2) aufweist.

3. Vorrichtung nach Anspruch 1 oder 2, **dadurch gekennzeichnet, dass** die Schwenkbewegung durch ein starres Verbindungselement (7) zwischen einem Schwenkantrieb des mindestens einen Solarkollektors (3) und der flexiblen Rohrverbindung (1) übertragbar ist.

4. Vorrichtung nach mindestens einem der vorhergehenden Ansprüche, **dadurch gekennzeichnet, dass** die flexible Rohrverbindung (1) mit mindestens einem Lateral-Kompensator gekoppelt ist.

## Claims

1. A device for connecting a fixed line to an absorber pipe of a solar-thermal power plant, wherein a swivel movement of at least one solar collector (2) can be performed around an axis (A) and an absorber pipe (3) can be moved with the swivel movement, comprising
a) a flexible pipe connection (1) between the fixed line (4) and the absorber pipe (3), wherein the flexible pipe connection (1) includes a metal hose being formed as a multilayer corrugated metal hose and the flexible pipe connection (1) is coupled with a compensator system comprising at least one angular compensator, at least one universal compensator and/or at least one cardanic compensator, in particular three angular compensators, and
b) a means for a torque-free and/or force-free connection of the flexible pipeline (1) to the absorber pipe (3), wherein at one end (12) the flexible pipe connection (1) is coupled with a rotary feedthrough (5), at least one drive (6) is arranged in alignment with the axis of rotation of the rotary feedthrough (5), and the means for the torque-free and/or force-free connection includes the flexible pipeline (1) whose first end (11) is connected to the absorber pipe (3) and whose second end (12) is connected to the fixed line (4) via the rotary feedthrough (5) and is rotatably mounted, wherein the axis of rotation of the second end (12) is in alignment with the swivel axis (A) of the at least one solar collector (3).

2. The device according to claim 1, **characterized in that** the means for the torque-free connection includes a means for synchronizing the swivel movement of the flexible pipe connection (1) with the swivel movement of the at least one solar collector (2).

3. The device according to claim 1 or 2,
**characterized in that** the swivel movement can be transmitted by a rigid connecting element (7) between a swivel drive of the at least one solar collector (3) and the flexible pipe connection (1).

4. The device according to at least one of the preceding claims, **characterized in that** the flexible pipe connection (1) is coupled with at least one lateral compensator.

## Revendications

1. Dispositif pour le raccordement d'une conduite fixe à un tube absorbeur d'une centrale héliothermique, un mouvement de pivotement d'au moins un collecteur solaire (2) autour d'un axe (A) pouvant être réalisé et un tube absorbeur (3) pouvant être déplacé conjointement lors du mouvement de pivotement, comprenant
a) un raccord de tube flexible (1) entre la conduite fixe (4) et le tube absorbeur (3), le raccord de tube flexible (1) présentant un tuyau métallique qui est réalisé sous forme de tuyau ondulé métallique multicouche et le raccord de tube flexible (1) étant accouplé à un système de compensateur avec au moins un compensateur angulaire, au moins un compensateur universel et/ou au moins un compensateur à cardan, en particulier trois compensateurs angulaires, et
b) un moyen pour le raccordement sans couple et/ou sans force de la conduite tubulaire flexible (1) au tube absorbeur (3),
le raccord de tube flexible (1) étant accouplé à une extrémité (12) à un passage rotatif (5),
au moins un entraînement (6) étant disposé en affleurement par rapport à l'axe de rotation du passage rotatif (5), et
le moyen pour le raccordement sans couple et/ou sans force présentant la conduite tubulaire flexible (1) dont la première extrémité (11) est raccordée au tube absorbeur (3) et dont la deuxième extrémité (12) est raccordée par le biais du passage rotatif (5) à la conduite fixe (4) et est supportée de manière rotative, l'axe de rotation de la deuxième extrémité (12) étant en affleurement avec l'axe de pivotement (A) de l'au moins un collecteur solaire (3).

2. Dispositif selon la revendication 1, **caractérisé en ce que** le moyen pour le raccordement sans couple présente un moyen pour synchroniser le mouvement de pivotement du raccord de tube flexible (1) au mouvement de pivotement de l'au moins un collecteur solaire (2).

3. Dispositif selon la revendication 1 ou 2, **caractérisé en ce que** le mouvement de pivotement peut être transmis par un élément de raccordement rigide (7) entre un entraînement de pivotement de l'au moins un collecteur solaire (3) et le raccord de tube flexible (1).

4. Dispositif selon au moins l'une quelconque des revendications précédentes, **caractérisé en ce que** le raccord de tube flexible (1) est accouplé à au moins un compensateur latéral.
